# EUROPEAN PATENT APPLICATION

(11) **EP 2 172 167 A1**
(43) Date of publication of application: **07.04.2010**
(21) Application number: 08165678.7
(22) Date of filing: 02.10.2008
(51) Int. Cl.: A61C 9/00

(54) **Dental retraction device and process of its production**

(71) Applicant: 3M Innovative Properties Company, St. Paul, MN 55144-1000 (US)
(72) Inventor: Maurer, Andreas, 86863 Langenneufnach (DE); Schulte, Christoph, 82140 Olching (DE); Hampe, Rüdiger, 82237 Wörthsee (DE); Peez, Robert, 86899 Landsberg a. Lech (DE); Klettke, Thomas, 86911 Diessen (DE); Gruetz, Rudi, 41065 Mönchengladbach (DE)
(74) Representative: Brem, Roland

(57) **Abstract**

The invention relates to dental retraction device having the shape of a yarn comprising twisted fibers comprising an alginate containing component, wherein the length of the fibers is in a range of about 10 to about 200 mm and/or wherein the fiber fineness is at least about 1 dtex. The invention also relates to a method for producing such a device as well as the use of this device in a process for retracting dental tissue.

## Description

### Field of the Invention

The invention relates to a dental retraction device, a process of production and use thereof. More specifically, the invention relates to a dental retraction device having the shape of a yarn comprising twisted fibers comprising an alginate containing compound.

### Background Art

For retracting gingiva from a prepared tooth a cord can be used. In this respect, a retraction cord is packed between gingival tissue and the margin of the prepared tooth (this region is also often called sulcus) using an appropriate dental instrument e.g. a Heinemann spatula. To obtain sufficient vertical and horizontal retraction of gingival tissue, it is often necessary to pack several lengths of retraction cord into the sulcus in order to be able to make a detailed dental impression.

A description of the background in regard to retraction cords can be found e.g. in US 4,522,593.

US 4,465,462 discloses a gingival retraction cord having a tapered diameter throughout its length and having a length sufficient to enable the cord to be wrapped several times about a tooth. In a preferred embodiment the cord is fabricated out of braided absorbent material such as cotton or less absorbent material such like silk. The cord might be optionally be impregnated with medication such as epinephrine.

US 4,522,593 discloses a gingival retraction cord having improved characteristics, such as being longitudinally elastic and transversely resilient. The advantages are achieved by a special knitting process resulting in numerous interlocking loops. Appropriate materials that can be used to manufacture such a cord are chosen from nylon, wire, yarn, cotton and man made fibers.

US 4,321,038 disclosed a flexible, multi strand, braided absorbent cotton cord impregnated with tissue retraction material such as epinephrine or aluminium chloride.

US 4,892,482 discloses a cotton retraction cord made of strands impregnated with suitable therapeutic preparations. The cord is stiffed with a stiffener strand such as a copper wire that provides the cord with deformability. The advantage of the cord is that it can be bent easily but retains the bent or deformed state.

WO 2006/002939 discloses a retraction thread comprising a yarn which is manufactured according to an air swirling method. It is described that due to the manufacturing design of the retraction thread the yarn should have improved absorbency. However, the yarn shows no further benefit like intrinsic hemostasis or a lower risk of bleeding after removal.

US 5,540,588 discloses a retraction cord (or tape) for placement between a tooth and its adjacent gum tissue during dental impression taking and restorative procedures includes a thermoplastic material such as Polytetrafluoroethylen so that the cord is resistant to shredding, tearing and sticking to dental restorative and impression taking materials. However, due to its polymer structure PTFE is not able to absorb body fluid and especially in the case of tissue damage blood and therefore can not provide a dry and blood-free sulcus which is necessary for successful impression taking. Another disadvantage is that the cord can not be impregnated with haemostatic agents and therefore can not be used as stand alone solution for retraction and hemostasis.

US 4,871,311 describes improvements in a method of and a retraction cord for uncovering and draining the preparation limit line of teeth by the use of a cord which is made out of superabsorbent swelling material made of an acrylic fiber having a skin constituted by a copolymer of polyacrylonitrile in which the skin provides about thirty percent of the weight of the fiber.

US 4,617,950 provides an astringent retraction cord for use in dental therapeutics by coating a gingival retraction cord with an astringent gel containing an astringent salt such as aluminium potassium sulphate and a body agent sufficient to stiffen the salt solution to stand on the cord. The gel coated retraction cord is adapted to be inserted into the gingival sulcus to effect retraction of gingival tissue. The gel-coatable retraction cord can have any suitable structure as for example a monofilament, twisted, braided, foam or knitted structure and can be fabricated from natural or synthetic fibers or a mixture of such fibers. Illustrative fibers include cotton, rayon, silk, nylon, polyester and the like.

US 6,375,461 describes a gingival retraction cord including a haemostatic and tissue stiffening and retraction effective amount of propylhexedrine which avoids the negative side effects associated with the use of epinephrine commonly used in conventional retraction cords. The gingival retraction cords according to this invention may include any retraction cord known in the art, however commercialized materials based on this invention include cotton or man-made fibers like cotton, polyamide or polyester.

WO 2005/122945 discloses gingival retraction cords that are constructed from two or more strands that are interlocked to form a knitted, braided, woven or twisted retraction cord. At least one or more strands are made from an absorbent material and another strand is made from a degradation-resistant material such as nylon, polyester, fiberglass or metal. The absorbent strands are impregnated with an active agent. The degradation-resistant strand resists degradation by the active agent. Because the degradation-resistant strand is part of the cords pattern, the retraction cord can be made sturdier without adversely affecting the cords inherent deformation properties. It is descrided that the main advantage of the gingival retraction cord is that it can be properly retract the gingiva using a haemostatic agent while also resisting degradation due to the haemostatic agent. However, the cord is formed by interlocking two or mores strands whereas at least one of the strands is made from an absorbent material such as cotton. If cotton-like fibers are used the cord will show a brachiated surface with small fiber ends standing out of the main pattern. These fiber ends typically grow together with the surrounding tissue when wound closing is achieved and increase the risk of post haemorrhage bleeding upon removal of the cord. In addition the cord could stick to the pilot cord already in position when the double cord technique is used.

US 4,232,688 discloses a dental gingival retraction cord dispenser.

US 4,871,311 describes a retraction method using a retraction cord made at least in part of a swelling material.

Generally, dental retraction cords are sometimes difficult to place into the gingival sulcus. The procedure can also be time consuming. It can also be cumbersome to remove the retraction cord prior to taking the impression. Coagulated blood may adhere to the cord and removing it may open the wound again which results in bleeding.

For a more convenient placement retraction pastes have been suggested.

Non-hardening retraction pastes containing either an anti-evaporating component or fibrillated fibers are described in e.g. US 2005/0008583 and US 2005/028749.

US 5,362,495 refers to a method for widening the gingival sulcus without bleeding or oozing, comprising inserting within the gingival sulcus a material in the form of a biocompatible paste which is injectable for external use and having a plastic viscosity measured at 20°C between about 13,000 and 30,000 Pa*s, wherein said material consisting of a material selected from the group of white clay, seaweed meal and mixtures thereof.

US 2005/0069838 discloses a dental kit and method for retraction sulcus using an expanding silicone compound or mixture of different silicone compounds. However, silicone compounds are of inorganic and hydrophobic nature, thus having limited biocompatibility with oral tissue and disadvantages in flowing to moist tissue and tooth surfaces and moist areas like the gingival sulcus.

US 5,976,439 describes a process for preparing a twisted alginate rope, which process comprises the steps of: (a) extruding an aqueous solution of a water soluble alginate into a coagulation bath; (b) contacting the extruded water soluble alginate with a source of a cation capable of forming a water insoluble alginate salt so as to produce a tow of water insoluble alginate filament fibers; (c) twisting the water insoluble alginate filament fibers of the tow; and (d) stretching the filament fibers up to 250 % of their original length. A dry tensile strength of 250 N/g to 350 N/g or a wet tensile strength of 140 N/g to 150 N/g is reported.

The alginate rope prepared according to the process described in US 5,976,439 may be used as a surgical packing material or in the treatment of cavity wounds. It is mentioned that by varying the relative rotational speed of the spinneret the strength and absorptive properties of the resultant rope can be varied. It is also mentioned, that a highly twisted rope prepared by the above described process can be used as a retraction cord but that a loosely twisted rope prepared by the above described process is disadvantageous in that an insertion implement, such as a spatula or the like could pass through the gaps in the loosely twisted product thereby making arrangement of the cord around the bed of the tooth problematic. Perforating a cord as described above can cause undesired tissue damage. However, US 5,976,439 describes that loosely twisted cords are superior in respect to absorption than highly twisted cords, meaning that loosely twisted cords have about double the absorbency than highly twisted products. It should be noted, that having a dry sulcus after retraction is often an important features for a successful master impression.

Thus, there is still room for improvement especially with regard to the requirements to be fulfilled with respect to modern dental materials.

### Description of the Invention

Ideally, a material is desired, that can easily be inserted into the sulcus and around a prepared tooth, possibly combined with sufficient absorbance capability and at the same time sufficient structural integrity to prevent perforation.

Additionally, if possible, the material should show a haemostatic effect, ideally without the need for an additional chemical impregnation, which can be costly.

Furthermore, it could be advantageous if the material can slightly expand during retraction and can change its surface to an essentially non- or only slightly sticking material in respect to tissue, dental restorative and impression materials.

In one embodiment the present invention features a dental retraction device having the shape of a yarn comprising twisted staple fibers comprising an alginate containing component, wherein the length of the fibers are in a range of about 10 to about 200 mm and/or wherein the fiber fineness is at least about 1 dtex.

An additional embodiment of the invention is directed to a kit of parts comprising as one part the dental retraction device as described in the text of the invention, and at least one of the following parts: an impression material and/or retraction caps.

In a further embodiment, the invention features a process of manufacturing a dental retraction device comprising the steps of providing fibers of an alginate containing component, wherein the fibers have a length in the range of about 10 to about 200 mm, and/or wherein the fiber fineness is at least about 1 dtex and and twisting the fibers and a dental retraction device obtainable according to this process.

Moreover, the invention features the use of a yarn comprising twisted fibers comprising an alginate containing component as a dental retraction device.

A further embodiment of the invention is directed to the use of a twisted yarn comprising an alginate containing component for the production of a dental retraction device as described in the text of the invention for retracting soft dental tissue from hard dental tissue of at least one tooth, the retracting process comprising the steps of placing the dental retraction device in the sulcus between soft dental tissue and hard dental tissue of at least one tooth, leaving the dental retraction device in the sulcus for at least about 1 min, and removing the dental retraction device from the sulcus.

In another embodiment, the invention relates to a packaging device or dispenser comprising the dental retraction device described in the text of the invention.

It has been found that the dental retraction device described in the text of the invention fulfils the practitioners' needs especially with regard to the balance of absorbency and structural integrity or toughness, respectively.
Figs. 1 and 2 show embodiments of the inventive dental retraction device.
Figs. 3 to 6 show a typical retraction procedure using an inventive dental retraction device.

In the context of the present invention, a "composition" is understood to be a mixture of two or more components.

A "dental retraction device" within the meaning of the invention is a device enabling the practitioner to retract soft dental tissue (e.g. gingival) away from hard dental tissue (e.g. tooth) before or during a dental impression of the tooth structure is made.

An "alginate" within the meaning of the invention is a salt of an alginic acid. Alginates are used for making dental impressions since many years. Alginates are usually delivered as powders and form an irreversible hydrocolloide in the presence of water. The alginic acid is a bio-copolymer containing dehydro-D-mannuronic acid and dehydro-L-guluronic acid. Alginate containing materials are sometimes preferred as these materials are biodegradable and thus lower the risk of infection during and after the treatment should material remain in the sulcus. Alginate pastes typically show good flow properties into the sulcus (due to the hydrophilic nature of the material).

If not otherwise indicated "molecular weight" within the meaning of the invention always means Mw (weight average of the molecular weight) and can be determined for the individual classes of polymers by gel permeation chromatography (GPC) against a standard of defined molecular weight. Suitable measurement methods are known to the person skilled in the art.

The molecular weight of alginates is usually determined by measurement of the viscosity of a defined solution with respect to a calibration curve. The molecular weight of alginates referred to in the invention is based on the information provided by the suppliers.

A "tooth structure" within the meaning of the invention is any tooth structure, prepared or ready for preparation by the dentist. It can be a single tooth or two or more teeth. A tooth structure is also referred to as hard dental tissue in contrast to soft dental tissue (e.g. gingival).

A "haemostatic agent" within the meaning of the invention is an agent which is able to reduce bleeding to a certain amount and/or causes blood to coagulate.

A "dental composition" within the meaning of the invention is any composition which can be used in the dental field. In this respect the composition should be not detrimental to the patient's health and thus free of hazardous and toxic components being able to migrate out of the composition.

A "dental impression material" within the meaning of the invention is a material used for making impressions of the tooth structure including the gingiva. A dental impression material is usually applied on a dental impression tray. A dental impression material can be based on different chemical substances and crosslink by various chemical reactions (including addition curing and condensation curing materials). Typical examples include silicone based impression materials (e.g. VPS materials) and polyether based impression materials and mixtures of those.

The unit "tex" refers to the fiber fineness and is defined as the weight of the fiber in grams (g) of 1000 meters (m) of yarn; the lower the number the finer the yarn. E.g., a fiber fineness of 3 dtex means that 1000 m of yarn have a weight of 30 g; dtex means deci-tex and ktex means kilo-tex.

A component or material is characterized as "expandable" within the meaning of the invention, if it is able to undergo an increase in size and volume (x-, y- and/or z-direction). This can be caused by contacting the component or material with another substance, e.g. a fluid, which is able to migrate into the component or material.

A device is characterized as being "radial expandable" if it can change its radial shape in one (x- or y-direction) or two dimensions (x- and y-direction). Thus, an expansion in shape in only one dimension can fall within the term "radial expandable", as well.

"Fluid" within the meaning of the invention shall comprise especially biological fluid (including exudates), e.g., liquids which are present in a patients' mouth like saliva and blood or a mixture of both. Those liquids are mainly comprised of water.

An agent is characterized as being "absorbing" within the meaning of the invention, if the agent is able on contact with fluid to suck up a certain amount of the fluid from the surroundings. This usually goes along with an increase in size and volume of the absorbing substance. Depending on the agent chosen, this sometimes goes also along with a change in the surface characteristics. E.g. the surface of the agent might become more slippery or gel-like.

A material or substance is characterized as "flexible" within the meaning of the invention if its 3-dim shape can be altered when applying an external force either manually or with the help of another device or by gravity. A cord is characterized as "flexible" within the meaning of the invention, if it is possible to bend the cord in all directions without undue burden according to the practitioners needs.

A "softening agent" within the meaning of the invention is an agent or additive, which can be added to a composition or material, in order to reduce stiffness. This may be accompanied by a smoother surface compared to the composition or material not comprising a softening agent. The addition of a softening agent can result in a slippery surface, especially if a huge amount (e.g. more than about 10 wt.-% with respect to the weight of the retraction device) is added.

The term "essentially does not" within the meaning of the invention is to be understood that a certain - sometimes unavoidable - effect does usually not take place or only occurs to a minimum amount, wherein the effect does not negatively affect the overall result to be achieved.

The setting behaviour of a curable composition is "not negatively affected" within the meaning of the invention, if the setting of the curable composition takes place within the given specification. Small deviations (e.g. within a range of about 5 to 10 %) from given physical parameters like viscosity, working time or setting time, which might occur if e.g. an additive is added or setting takes place in conjunction with other materials or substances (e.g. in the presence of a retraction device), are not considered detrimental.

"Ambient conditions" within the meaning of the invention mean the conditions which the inventive composition is usually subjected to during storage and/or handling. Ambient conditions may, for example, be a pressure of about 900 to about 1100 mbar, a temperature of about -10 to about 60 °C and a relative humidity of about 10 to about 100 %. In the laboratory ambient conditions are typically adjusted to about 23 °C and about 1013 mbar.

As used herein, "a", "an", "the", "at least one" and "one or more" are used interchangeably. The terms "comprises" or "contains" and variations thereof do not have a limiting meaning where these terms appear in the description and claims. Also herein, the recitations of numerical ranges by endpoints include all numbers subsumed within that range (e.g., 1 to 5 includes 1, 1.5, 2, 2.75, 3, 3.80, 4, 5, etc.).

The term "filament" means a fiber which has been extruded and is then converted into yarn fiber, staple, or tow (an unbroken strand of fiber).

The term "yarn" means a continuous strand of fibers which can be used in tufting, weaving and which may be either spun staple or continuous filament.

The term "twisted filament yarn" (in German: "Zwirn") means a yarn made out of filaments. Twisted filament yarn typically has a high tensile strength (like a cable of a cable car).

The term "twisted staple fiber yarn" means a yarn made out of staple fibers and has a more open structure compared to twisted filament yarn (like knitting wool).

The term "staple fiber" means a fiber (typically of short lengths) which has been chopped from continuous filament into various lengths. Staple fiber typically have to be further processed (e.g. spun) into yarn before it can be used for textile applications.

### Detailed Description of the Invention

It has been found that the inventive dental retraction device can easily be inserted in the sulcus like a cord. By applying to and/or packing the dental retraction device into the sulcus, a mechanical retraction of the gingiva can be achieved.

According to one embodiment, the inventive dental retraction device has a tensile strength in a range allowing an easy removal of the dental retraction device out of the sulcus.

Furthermore, according to one embodiment the dental retraction device may change its surface due to gelation of alginate and water absorption. Gelation of alginate typically results in a smooth, compact surface and a slight expansion of the original structure. The smooth, gelated surface typically shows a non-sticking behaviour in respect to coagulated blood, dental restorative impression materials and tissue. This is in contrast to the state of the art retraction cords and may facilitate an easy removal out of the sulcus. The smooth surface may prevent sticking of the cured composition to coagulated blood which may be present in the sulcus. Sticking often may cause an undesired wound opening and bleeding upon removal of the retraction composition.

Certain embodiments of the inventive dental retraction composition are robust against fluids that might be present in the moist environment of the oral cavity, where the setting of the composition takes place (e.g., the dental retraction device does not dissolve in saliva).

Due to the nature of the alginate component being present in the dental retraction device, the dental retraction device itself may show to some extend haemostatic properties. This feature may contribute to stop bleeding which often can not be prevented when preparing the tooth or tooth stump. The astringents can be incorporated into the formulation, if desired. The addition of haemostatic agents sometimes supports the retraction procedure.

The alginate containing dental retraction device of the invention typically shows features known from alginate wound dressings known in the art. Alginates which can be used are typically non-toxic, non-sensitising and non-allergenic materials, which have good absorption characteristics by the living body. This may be beneficial should residues of the composition (cured or not cured) remain in the sulcus. Alginates are sometimes said to be biocompatible, meaning that it does not produce a toxic, injurious, or immunological response in living tissue, and/or biodegradable, meaning that residues of the material can be absorbed or degraded by the living body.

Depending on the formulation chosen, the dental retraction device according to the invention may fulfil at least one of the following features:
a) The dental retraction device is biocompatible.
b) The dental retraction device can be provided in cord-like form.
c) The dental retraction device has a sufficient tensile strength to be removed out of the sulcus ideally in one piece.
d) The dental retraction device may have inherent or intrinsic haemostatic properties, at least to some extend, without the need for an additional chemical impregnation.
e) The dental retraction device may have a high absorbency and at the same time high structural integrity helping to prevent perforation during the application process.
   Especially, feature d) can be beneficial, if a chemically sensitive patient is to be treated.

The inventive dental retraction device is typically made from twisted alginate staple fiber yarn. Without wishing to be bound to a particular theory, it is assumed that due to this approach the structural integrity of the dental retraction device can be sufficiently maintained.

It is further assumed that a structural integrity is helpful for applying the dental retraction device into the sulcus e.g. by the use of a spatula. Due to the twisted fibrous structure of the yarn, the volume of the final cord-like structure is much bigger compared to a cord produced by using flat filaments.

A yarn of twisted fibers typically shows a higher absorbency compared to a yarn of twisted filaments. A retraction device having a high absorption is often beneficial, especially if the absorption goes along with a slight expansion of the yarn. This typically results not only in a dry sulcus - which is desired - but also in a better retraction.

Without wishing to be bound to a certain theory, it is assumed that the better absorbency of a yarn of twisted fibers is caused by a more open structure compared to a yarn of flat filaments.

Open structure means that it contains cavities and channels. An open structure may further have a positive influence on hemostasis due to a faster availability of Calcium ions being typically present in the alginate.

A yarn of twisted filaments typically has a unique strength generating mechanism. Due to the close, parallel and helical arrangement of the fibers, the force that is needed for breaking the twisted structure strengthen it at the same time.

In contrast to this, a yarn of twisted fibers has a less idealized helical structure and therefore typically shows less strength, expecially when the fibers slowly transform into a gel.

Surprisingly it has been found, that a yarn comprising twisted fibers comprising an alginate containing component is durable enough to sustain the actions and forces occurring during the subsequent process of application into the sulcus.

In one embodiment the dental retraction device shows a tensile strength (wet) of at least about 150 N/g or of at least about 200 N/g or of at least about 270 N/g measured according to "measurement of tensile strength" described in the experimental section.

In a further embodiment the dental retraction device can be characterized by at least one of the following parameters or features:
- fiber moisture content of about 0 to about 50 wt.-% or about 1 to about 40 wt.-% or about 5 to about 30 wt.-%, with respect to the weight of the dental retraction device,
- fiber calcium content of about 2 to about 15 wt.-% or about 3 to about 10 wt.-% with respect to the weight of the fiber,
- guluronate content of about 30 to about 80 wt.-% or about 40 to about 60 wt.-% with respect to the weight of the fiber, and/or
- expansion value: up to about 400 % or up to about 300 % or up to about 250 %, with respect to the volume of the dry fiber with respect to the diameter of the dry fiber.

The expansion value can be determined using a measuring microscope.

A useful solvent (e.g. saliva, exudate, water) uptake of the retraction device when soaked in deionized water for about 1 min without load can reach a value above about 140 wt.-% or even above about 300 wt.-% related to the weight of the dry absorbing agent of the retraction device.

In one embodiment the retraction device is able to absorb up to about 1 ml or up to about 0.5 ml or up to about 0.2 ml of fluid.

In one embodiment, the dental retraction device can be comprised of the yarn comprising an alginate containing compound only, that is, the dental retraction device is a yarn of twisted alginate staple fibers.

According to another embodiment, the dental retraction device comprises at least two sections A and B, wherein section A comprises a supporting element and section B comprises the alginate containing component.

Typically, the material of the supporting element of section A of the device has properties being different from the properties of the alginate containing component of section B with regard to geometry and/or physical and/or chemical properties, e.g. with regard to shape, elasticity, hardness, pore volume and/or absorbing property.

A supporting element typically contributes to the stability and/or integrity of the dental retraction device. The shape and/or structure of a supporting element are not particularly limited. Useful structures include cords, filaments or wires. The same holds true for the chemical nature. The supporting element can be mainly based on organic (comprising e.g. cotton, chitin, polysaccharides like cellulose) and/or synthetic and/or extrudable plastics or materials (comprising e.g. polyester, polyamide, polyethylene, polypropylene) and/or inorganic materials (comprising e.g. Ag, Au, Cu, Co, Cr, Mo metals or alloys) and combinations or mixtures of materials of those.

A retraction device with two different sections can be made by covering the first section with the second section, which can be a layer of a material being different from the material of the first section. The second section can be fixed or attached to the second section e.g. using and adhesive or by laminating both materials. If needed, additional layers of material can be attached.

In a specific embodiment, one section comprises a textile material (e.g. woven or non-woven fabric) such as cotton. In another embodiment one section comprises the same material with regard to the chemical nature as the other section but with different physical properties like e.g. length of the fibers, expansion properties or pore volume.

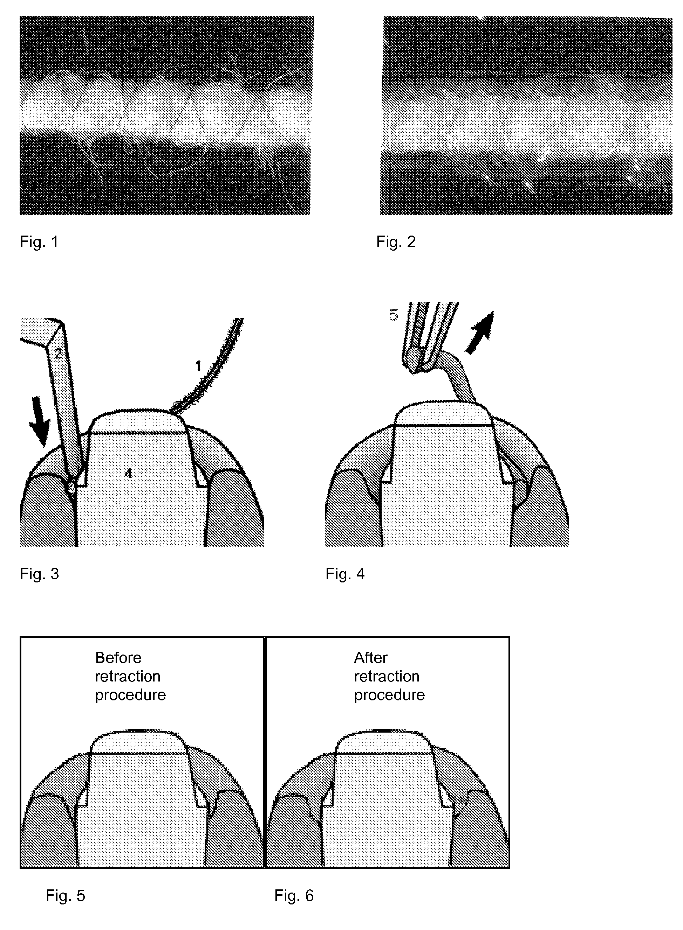

According to another embodiment, the at least two sections of the dental retraction device are arranged in a core-shell structure or side by side construction. It is also possible to wind, coil or wrap one section around the other section. An embodiment is shown in Fig. 1 (dry status) and Fig. 2 (wet or moist status). In another embodiment, the dental retraction device has a so-called "matrix fibril" structure. In cross section, there are areas of one component in a matrix of a second component ("island-in-the-sea fibers"). With respect to the present invention this means, that the twisted fibers comprising an alginate are contained in a matrix of other fibers e.g. fibers comprising extrudable polymers such as nylon, polyester, polypropylene and/or polystryrene. This and other suitable structures are described in Handbook of Fiber Science and Technology; Vol. III, High Technology Fibers, Part D, Bicomponent Fiber, T.F. Cooke, pages 247 - 280, the content of which with regard to the structure of fibers is herewith incorporated by reference.

In one embodiment the retraction device comprises an inner flexible section (core) surrounded by an absorbing outer section (shell) or an inner absorbing section (comprising e.g. the alginate containing component) and an outer non-absorbing section (e.g. a metal wire, cord or filament).

The alginate containing component can be present in the dental retraction device in an amount of at least about 10 or of at least about 20 or of at least about 30 wt.-% with respect to the weight of the whole dental retraction device.

The alginate containing component can be present in the dental retraction device up to an amount of about 100 or up to about 80 or up to about 40 wt.-%. Thus, useful ranges for the alginate containing component to be used include from about 10 wt.-% to about 100 wt.-% or from about 20 wt.-% to about 80 wt.-% or from about 30 wt.-% to about 60 wt.-% with respect to the weight of the whole dental retraction device.

The difference to 100 wt.-% is attributed to the supporting element of section B, if present.

The exact shape of the dental retraction device is not particularly limited, either, as long as the intended use can be achieved. However, it has been found that certain geometrical shapes and/or structures may allow for an easy placement of the retraction device in the sulcus especially in combination with an application tool such as a spatula.

The retraction device is typically shaped like a cord and is preferably flexible in nature. Unlike pastes, a cord can be removed from the sulcus in a standard procedure e.g. with the aid of a pincer.

The dental retraction device before application into the sulcus can be up to about 10 cm long. However, even a shorter version can be preferred such as about 1 cm, e.g. if only a small region of the sulcus has to be retracted. Generally, the retraction device has a length in the range of about 1 to about 15 cm or about 5 to about 10 cm or about 2 to about 5 cm.

The diameter of the retraction device (before application into the sulcus) is not particularly limited, either, but is usually in the range of about 0.1 to about 2 mm or about 0.2 to about 1 mm. In other embodiments the diameter of the retraction device does not exceed values above about 1.5 mm or about 1.0 or about 0.5 mm.

The fibers present in the inventive dental retraction device can also be characterized by the fiber fineness unit "tex" as defined above. Typically, the fibers which can be used have a fiber fineness of at least about 1 dtex or at least about 1.5 dtex or at least about 2 dtex. There is no particular upper limit, however, the fiber fineness is typically below about 10 dtex or below about 8 dtex or below about 5 dtex. Thus, useful ranges include from about 1 dtex to about 10 dtex or from about 1.5 dtex to about 8 dtex or from about 2 dtex to about 5 dtex.

In a further embodiment, the cord-shaped retraction device can be curled or coiled, either with overlapping or open ends. Thus, the retraction device may have an open or closed ring-like structure, however, without the front and the rear end of the retraction device being fixed together. In contrast to a closed loop or circle, a retraction device pre-shaped as mentioned above is more flexible in use and may allow for a more convenient placement of the device round the tooth structure and into the sulcus to be treated compared to a not pre-shaped retraction device, especially if the retraction device has a more rigid morphology.

Alginates are naturally occurring polysaccharides found in brown seaweed. When the seaweed is harvested and processed, alginic acid is converted to a mixture of calcium and sodium salts. The fibers of calcium or calcium/sodium alginate can be used as a basis for fiber-gel or retraction dressing.

Alginate materials may perform an ion exchange when contacted with wound exudate. Sodium ions found in the wound exudate are very soluble and exchange with the calcium ions which are typically present in the alginate material. Upon saturation of an alginate containing material with a solvent, saliva or wound exudate, the alginate containing material is converted into a soft, conformable hydrophilic gel.

Alginate fibers can absorb up to about 20 times of their own weight in wound exudate. A fiber-gel matrix may provide a moist wound healing environment, as well as a highly conformable non-adherent dressing.

The chemical nature of the alginate which can be used for the inventive dental retraction device is not particularly limited, however, the alginates are usually bio-copolymers containing dehydro-D-mannuronic acid and dehydro-L-guluronic acid. Naturally available hydrogel based materials are preferred. Suitable alginates are alginates from algae. Preferred are alginates from algae Laminaria hyperborea. Especially useful are alginates from Laminaria hyperborea Steam and from Lessonia trabeculata. Also synthetic alginates having a high guluronate content can be used. Preferred salts of these alginic acides are sodium and potassium salts. Especially preferred is the potassium salt.

A particularly preferred class of alginates found to be useful for the present invention has a comparable high guluronate content (e.g. content of guluronate units above about 50 wt.-%). It was found that alginates with a high content of guluronan units can form stronger gels than those with a low guluronan content. Compositions which allow the formation of strong gels (e.g. gels with a high tensile strength) can be advantageous.

The guluronate content of alginates which can be used can be above about 30 wt.-% or above about 50 wt.-% or above about 60 wt.-% with respect to the weight of the alginate in dry form. The guluronate content of the alginate can be as high as about 80 wt.-% or about 75 wt.-% with respect to the weight of the alginate in dry form. Ranges which have been found to be useful are about 50 to about 80 wt.-% or between about 60 to about 75 wt.-% with respect to the weight of the alginate in dry form.

The molecular weight (Mw) of the alginate is not particularly limited, either, but typically is in a range between about 200,000 and about 400,000 g/mol or between about 250,000 and about 350,000 g/mol or between about 200,000 and about 300,000 g/mol.

The dental retraction device may comprise one or more additives selected from network builder, colourants, haemostatic agents, anti-evaporation agents, flavouring agents, viscosity modifiers, preserving agents, surfactants and mixtures thereof.

There is no need for one or more additives to be present but if one or more of these additive is/are present, these additives are typically present in an amount, which does not negatively influence the desired properties of the dental retraction device. Thus, the additive(s) can be present in an amount of at least about 0.01 wt.-% or at least about 1 wt.-% with respect to the weight of the whole dental retraction device.

The additive(s) can be present in an amount up to about 50 wt.-% or at least up to about 20 wt.-% or at least up to about 15 wt.-% with respect to the weight of the whole dental retraction device in dry form.

Typically, those agent(s) or additive(s) can be present in an amount of about 0.01 wt.-% to about 25 wt.-% or of about 0.01 wt.-% to about 20 wt.-% or about 0.1 wt.-% to about 15 wt.-% with respect to the weight of the whole dental retraction device in dry form.

In one embodiment the dental retraction device might contain as an additive a network builder to enhance mechanical strength, if needed. If a network builder is present, it is typically comprised in section A as described above and is acting as a supporting element.

The additional network(s) may be build by tailor-made organic or other natural compound(s) like polyether(s), polyvinyl alcohol derivative(s), polyrotaxane(s), cellulose derivative(s), chitosane derivative(s), cyclodextrine(s), derivatives from hyaluronic acid, polyacrylamide(s) or polymethylacrylamide(s), compounds containing reactive (e.g. polymerizable) residues.

A network builder might not be present at all, but can be present in an amount up to about 25 wt.-% or up to about 50 wt.-% with respect to the weight of the whole dental retraction device. If a network builder is present, it is typically present in an amount of at least about 3 wt.-% or at least about 10 wt.-% with respect to the weight of the whole dental retraction device.

In a further embodiment, the dental retraction device has a colour which may allow an easy detection in a patient's mouth (especially compared to oral tissue and/or tooth substance) and control whether after the treatment all residues of the retraction device have been removed from the sulcus. E.g., a blue, green or violet colour may be suitable. However, in view of some new impression techniques like e.g. digital scanning, other colours might be preferred. Some techniques prefer colours that are less visible for the scanning instrument e.g. red or white. Colouring of the retraction device can be achieved by incorporating colorants or pigments (organic and inorganic) into the composition.

Examples of colourants which can be used include red iron oxide 3395, Bayferrox 920 Z Yellow, Neazopon Blue 807 (copper phthalocyanine-based dye) or Helio Fast Yellow ER.

In a further embodiment the dental retraction device may comprise one or more haemostatic agents. Haemostatic agents (sometimes also referred to as astringent agents) that may be useful in assisting haemostasis include, but are not limited to oxides, chloride or sulphate salts of ferrum (e.g. ferric sulfate, ferric subsulfate, ferric chloride), aluminium (e.g. potassium aluminum sulfate, aluminum ammonium sulfate, aluminum sulfate, aluminum chlorohydrate, aluminum acetate) and zinc, polyphenols, ellag acid, permanganates (e.g. potassium permanganate), silver nitrate and hydrogen peroxide and mixtures thereof. One preferred class of haemostatics include aluminum compounds.

Suitable biopolymers and polysaccharides, which might contribute to a haemostatic effect include cellulose, celluloses derivates, gelatine, starch, starch derivates, collagen, alginate, chitin, chitosan, or hyaloron acid.

Physically effective haemostyptica include phytogenic or mineral zeolites, micro porous polysaccharide spheres, kaolin and celite.

Pharmaceutical drugs which might contribute to a haemostatic effect include adrenaline, epinephrine, propylhexidrin, adrenochrom-monosemicarbazone propylgallat, tranexamic acid, etamsylate, batroxobin, thrombin, fibrin dressings.

If a haemostatic agent is present, it is typically present in an amount of about 0.01 wt.-% to about 25 wt.-% or in an amount of about 0.1 wt.-% to about 15 wt.-% or in an amount of about 0.5 wt.-% to about 5 wt.-% with respect to the weight of the whole dental retraction device in dry form.

In a further embodiment, the invention features a kit of parts comprising as part (I) a dental retraction device as described in the text of the invention, and at least one of the following parts (II, III and/or IV):
- an impression material,
- retraction caps and/or
- an adstringent agent.

The impression materials which can be used in combination with dental retraction devices are not particularly limited in regard to their chemistry and nature. Polyether moieties or silicone moieties containing impression materials have found to be useful. Examples of polyether moieties containing impression materials are given in US 6,383,279, US 2002/0156149 and US 2005/02503871. Commercially available materials are sold e.g. under the brand Impregum^{™} (3M ESPE).

The kit may further comprise accessories like retraction caps. Retraction caps can be useful for keeping the retraction material in place until an impression is taken or pushing the curable or cured dental retraction composition into the sulcus. Retraction caps can be made of soft, tissue friendly material, e.g. cotton. However, other materials might be useful as well. If appropriate a temporary restoration can be used as retraction cap, too. Commercially available retraction caps are e.g. sold under the brand Comprecap^{™} (Coltène Whaledent).

In a further embodiment, the invention features a process of manufacturing a dental retraction device comprising the steps of providing fibers of an alginate containing component, wherein the fibers have a length in the range of about 10 to about 200 mm, and/or wherein the fiber fineness is at least about 1 dtex and twisting the fibers.

More particularly, the invention is directed to a process of manufacturing a dental retraction device comprising the steps:
- Providing fibers of an alginate containing component, the length of the fibers being in a range of about 10 to about 200 mm or in the range of about 10 to about 100 mm and/or the fiber fineness being in a range of about 1 to about 5 dtex.
- Producing a carded sliver, which is a rope of fibers (e.g. by the use of a carding machine) and optionally placing the fiber tow in can. If necessary, the process can be repeated until a well parallelized tow is achieved.
- Optionally combining two or multiple tows (this may help to equalize thickness of the carded sliver (typically drafting doubling about 2 to about 6 times) preferably by using a drawing line and stretching the drawing frame sliver (typical drafting range from about 2 to about 7 times) to reach an acceptable uniform tow-size. Drawing is typically performed two times.
- Converting the sliver with a flyer to a slub yarn (typical draft range about 3 to about 10 times, rotation range from about 30 to about 100 m⁻¹).
- Spinning the staple fiber using a spinning machine (e.g. a ring spinning machine; typical draft range from about 3 to about 30 times; rotation range from about 100 to about 1000 m⁻¹).

In some cases it can be desirable to use a spiral covering spinning machine to wound the staple fiber yarn with a metal yarn e.g. a silver covered cupper monofilament. The diameter of the metal yarn can be in the range of about 0.01 mm to about 0.1 mm.

The invention is also directed to a dental retraction device obtainable according to the process described in the text of the invention.

In a further embodiment, the invention relates to the use of a yarn comprising twisted stapel fibers comprising an alginate containing component as a dental retraction device, the length of the fibers being in a range of about 10 to about 100 mm and/or the fiber fineness being in a range of about 1 to about 5 dtex.

A typical process for the application of the dental retraction device in the dental practice comprises the steps of
• placing the dental retraction device in the sulcus between soft dental tissue and hard dental tissue of at least one tooth,
• leaving the dental retraction device in the sulcus for at least about 1 min,
• removing the dental retraction device from the sulcus.

The above process comprises the steps of placing, applying or packing the dental retraction device into the sulcus between soft and hard dental tissue. In some cases compression caps or bridges, temporary crowns or bridges or even a first impression might be used as a kind of accessory during the retraction process. The dental retraction device may remain in the sulcus for a couple of minutes (e.g. about 1 to about 10 or about 2 to about 6 min) to achieve effective mechanical retraction.

The dental retraction device of the invention is preferably provided to the practitioner under hygienic conditions. One possibility to achieve this is packing the retraction device in a sealed container under hygienic conditions.

Thus, the invention is also directed to a packaging device or dispenser comprising the inventive dental retraction device, if desired in sterile form. The packaging device or dispenser may have the shape of a container for receiving the dental retraction device having a length in the range of about 50 to about 3000 mm or of about 100 to about 2000 mm and a cutting tool for cutting the dental retraction device in pieces or desired length.

Alternatively, the packaging device or dispenser may contain welds for receiving single (ready-to-use) dental retraction devices having typically a length in the range of about 10 to about 60 mm. The container may have only one compartment or weld.

An application procedure is exemplified in Figs. 3 to 6.
Fig. 3: The dental retraction device (1) is placed by means of an application instrument (2) into the sulcus (3) of a tooth structure (4).
Fig. 4: After sufficient retraction, the slightly expanded dental retraction device (1) having a slippery surface can be removed from the sulcus using an instrument (5) such as a pincer.
Figs. 5, 6: The sulcus (3) has been widened due to the application of the inventive dental retraction device (Fig. 6) compared to the sulcus before the application (Fig. 5). After removal of the dental retraction device an impression-taking process with a common impression material can follow (not shown).

Preferably, the dental retraction device can be fast and easily applied to the sulcus and removed after curing therefrom, if possible, in one piece. Due to the biocompatible and surface properties of the alginate containing retraction device (non sticky), the device can preferably be removed without damaging the sulcus, if possible in one piece.

The following examples are given to illustrate, but not limit, the scope of this invention. Unless otherwise indicated, all parts and percentages are by weight.

### Examples

If not reported otherwise, all tests were conducted at ambient conditions (23°C; 50 % humidity and room pressure).

### Measurements

### Tensile Strength

Tensile strength was determined for dry and wet status of the specimens. For evaluating the wet tensile strength the specimens were stored for 30 s in deionized water. The measurements were performed with a universal test machine (UPM Z020, Zwick). Before testing, the staple fiber yarns were cut into 120 mm to achieve a gauge length of 100 mm pieces. The test velocity was 100 mm/min and the force sensor was calibrated up to 5 kN.

### Fiber Fineness

The staple fiber yarn fineness is given in tex and can be determined as follows. The weight of a specific length of the staple fiber yarn was determined. The fineness in tex was then calculated by weight (g) divided by length (mm).

### Process of Production

### Alginate Fiber

An alginate fiber tow was purchased from Admedsol (UK) having a tow thickness of about 10 mm. The filament fineness was determined to be about 3.2 dtex. The tow was cut to staple fiber of 47 to 50 mm length. To stabilize the spinning process additional staple fibers of about 100 mm were cut by hand and added. The amount of supporting long staple fibers was about 10 to 15 wt.-%.

A silver covered Cu-filament yarn (2 wt.-% Ag) with a diameter of about 0.07 mm was used in some cases to wound the final alginate staple fiber yarn.

### Card sliver

Non-woven fleece width: 600 mm; compressed by air-stream to a tow fineness of 7,6 ktex at a delivery speed of 10 m/min. Tension can holder 3.0 %.

### Drawing frame sliver (first passage)

Single tow fineness 7.2 ktex; drafting doubling D = 3 times, tow fineness exit 5.2 ktex; draft 4.15 times; tension tow feeding 0,99; tension tow exit 1.02; main drafting zone 77 mm; delivery speed 15.6 m/min.

### Drawing frame sliver (second passage)

Single tow fineness 5.2 ktex; drafting doubling D = 5 times; tow fineness exit 4.8 ktex; draft 5.42 times; tension tow feeding 0,99; tension tow exit 1.02; main drafting zone 46 mm; delivery speed 20.4 m/min.

### Pre-spun yarn

Tow fineness 4.8 ktex; pre-spun staple fiber yarn fineness exit 555 tex; draft 8.65 times; rotation/twist 71 m⁻¹; delivery speed 7.6 m/min; flyer rotation speed 540 min⁻¹.

### Ring spinning machine

Yarn 1: pre-spun staple fiber yarn fineness 555 tex; staple fiber yarn fineness exit 30-50 tex; draft 18.5 times; rotation/twist 654m⁻¹; delivery speed 10.4 m/min; ring spindle rotation speed 6800 min⁻¹; thickness about 0.5 mm.

Yarn 2: pre-spun staple fiber yarn fineness 555 tex; staple fiber yarn fineness exit target 30-60 tex (z). Than wounded by silver in 1Z and in 1 S direction e.g. using a spiral covering machine; draft 18.5 times; rotation/twist 700m⁻¹; delivery speed 8.5 m/min; spindle rotation speed 5130 min⁻¹. The result of this process is shown in Fig. 1.

### Example 1:

The described yarns above were tested with respect to their mechanical properties. The test results are given in Table 1 below.

**Table 1**

| Example | Tensile Strength dry [N/g] | Tensile Strength wet [N/g] |
|---|---|---|
| Yarn 1 | 402 | 214 |
| Yarn 2 | 532 | 279 |

### Average Water absorption capability

The dry weights of yarns were determined. Then, the specimens were stored in water for 5 min. Before determination of absorption capability the specimens were placed on a paper towel for 5 s. After that the weight of the specimens was determined again (Table 2).

**Table 2**

| Example | Absorption capability [% related to dry weight] |
|---|---|
| Yarn 1 | 286 |
| Yarn 2 | 151 |

### Expansion capability

The diameter of dry yarns was determined using a microscope (MM40, Nikon, Japan) combined with an analyse computer (Quadra-Chek 200, Metronix Inc., USA). Then, the specimens were stored in water for 5 min. The fibers wounded by silver filament showed thicker and thinner diameters due to the fact that the surrounding silver filament does not have the capability to swell (Fig. 2). Therefore, the average diameter of the alginate part was determined based on 6 data points.(calculation done automatically by analyse computer above) - Table 3.

**Table 3**

| Example | Average Diameter [% of diameter in dry status] |
|---|---|
| Yarn 1 | 150 |
| Yarn 2 | 237 |

## Claims

1. A dental retraction device having the shape of a yarn comprising twisted fibers comprising an alginate containing component, wherein the length of the fibers is in a range of about 10 to about 200 mm and/or wherein the fiber fineness is at least about 1 dtex.

2. The dental retraction device according to claim 1, fulfilling at least one of the following features/parameters:
• fiber moisture content of about 0 to about 50 wt.-% with respect to the weight of the dental retraction device,
• fiber calcium content of about 2 to about 15 wt.-% with respect to the weight of the fiber,
• guluronate content of about 30 to about 80 wt.-% with respect to the weight of the fiber, and/or
• expansion value of up to about 400 % with respect to the volume of the dry fiber.

3. The dental retraction device according to any of the preceding claims, comprising at least two sections A and B, section A comprising a supporting element and section B comprising the alginate containing component.

4. The dental retraction device according to any of the preceding claims, wherein the at least two sections are arranged in a core-shell structure, side by side structure, in a structure wherein section A is twisted around section B or a combinations of either of these possibilities with each other.

5. The dental retraction device according to claim 3 or 4, wherein the supporting element comprises materials selected from cotton, chitin, polysaccharides, extrudable plastics, metals, metal alloys and combinations or mixtures of materials of those.

6. The dental retraction device according to any of the preceding claims, wherein the alginate containing component comprises an alginate selected from the group of *Laminaria hyperborea stem, Laminariahyperborean leaf, Lessonia trabeculata, Laminaria digitata, Macrocystis pyrifeira, Lessonia nigrescens, Ascophyllum nodosum, Laminaria japonica, Durvillea potatorum, Durvillea antarctica,* bacterial alginate and mixtures or combinations thereof.

7. The dental retraction device according to any of the preceding claims comprising at least one of the following components: additives selected from the group of colorants, haemostatic agents, anti-evaporation agents, flavouring agents, surfactants, preserving agents, polymers, crosslinked systems and mixtures or combinations thereof.

8. A kit of parts comprising as one part a dental retraction device according to any of the preceding claims, and at least one of the following parts:
• an impression material,
• retraction caps and/or
• an astringent agent.

9. A process of manufacturing a dental retraction device comprising the steps of
• providing fibers of an alginate containing component, the length of the fibers being in a range of about 10 to about 200 mm and/or the fiber fineness of at least about 1 dtex, and
• twisting the fibers.

10. A dental retraction device obtainable according to the process described in claim 9.

11. Use of a yarn comprising twisted fibers comprising an alginate containing component for the production of a dental retraction device, the length of the fibers being in a range of about 10 to about 200 mm and/or the fiber fineness of at least about 1 dtex.

12. The use according to claim 11, wherein the dental retraction device is used for retracting soft dental tissue from hard dental tissue of at least one tooth, the process comprising the steps of
○ placing the dental retraction device in the sulcus between soft dental tissue and hard dental tissue of at least one tooth,
○ leaving the dental retraction device in the sulcus for at least about 30 s, and
○ removing the dental retraction device from the sulcus.

13. The dental retraction device as described in any of the preceding claims contained in a packaging device or dispenser,
○ the packaging device or dispenser having the shape of a container for receiving the dental retraction device having a length of up to about 2 m and optionally a cutting tool or
○ containing welds for receiving single (ready-to-use) dental retraction devices having a length in the range of about 1 to about 15 cm.
